(19) Europäisches Patentamt
European Patent Office
Office européen des brevets

(11) **EP 2 882 881 B1**

(12) **EUROPÄISCHE PATENTSCHRIFT**

(45) Veröffentlichungstag und Bekanntmachung des Hinweises auf die Patenterteilung:
**28.11.2018 Patentblatt 2018/48**

(21) Anmeldenummer: **13745335.3**

(22) Anmeldetag: **27.06.2013**

(51) Int Cl.:
*C22C 19/05* (2006.01)      *H01T 13/39* (2006.01)

(86) Internationale Anmeldenummer:
**PCT/DE2013/000334**

(87) Internationale Veröffentlichungsnummer:
**WO 2014/023274 (13.02.2014 Gazette 2014/07)**

(54) **VERWENDUNG EINER NICKEL-CHROM-EISEN-ALUMINIUM-LEGIERUNG MIT GUTER VERARBEITBARKEIT**

USAGE OF A NICKEL-CHROMIUM-IRON-ALUMINIUM ALLOY WITH GOOD WORKABILITY

UTILISATION D'UN ALLIAGE DE NICKEL-CHROME-ALUMINIUM-FER AYANT UNE BONNE USINABILITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.08.2012 DE 102012015828**

(43) Veröffentlichungstag der Anmeldung:
**17.06.2015 Patentblatt 2015/25**

(73) Patentinhaber: **VDM Metals International GmbH 58791 Werdohl (DE)**

(72) Erfinder: **HATTENDORF, Heike 58791 Werdohl (DE)**

(56) Entgegenhaltungen:
**EP-A1- 0 549 286        EP-A1- 1 717 330
WO-A1-2012/113373      WO-A2-2007/149826
DE-A1-102006 053 917**

EP 2 882 881 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft die Verwendung einer Nickel-Chrom-Eisen-AluminiumLegierung mit hervorragender Hochtemperaturkorrosionsbeständigkeit, guter Kriechbeständigkeit und verbesserter Verarbeitbarkeit.

Austenitische Nickel-Chrom-Eisen-Aluminium-Legierungen mit unterschiedlichen Nickel-, Chrom- und Aluminiumgehalten werden seit langem im Ofenbau und in der chemischen Prozessindustrie eingesetzt. Für diesen Einsatz ist eine gute Hochtemperaturkorrosionsbeständigkeit und eine gute Warmfestigkeit/ Kriechbeständigkeit auch bei Temperaturen oberhalb 1000°C erforderlich.

Generell ist zu bemerken, dass die Hochtemperaturkorrosionsbeständigkeit der in Tabelle 1 angegebenen Legierungen mit zunehmendem Chromgehalt steigt. Alle diese Legierungen bilden eine Chromoxidschicht ($Cr_2O_2$) mit einer darunter liegenden, mehr oder weniger geschlossenen, $Al_2O_3$-Schicht. Geringe Zugaben von stark Sauerstoff affinen Elementen wie z. B. Y oder Ce verbessern die Oxidationsbeständigkeit. Der Chromgehalt wird im Verlauf des Einsatzes im Anwendungsbereich zum Aufbau der schützenden Schicht langsam verbraucht. Deshalb wird durch einen höheren Chromgehalt die Lebensdauer des Werkstoffs erhöht, da ein höherer Gehalt des die Schutzschicht bildenden Elementes Chrom den Zeitpunkt hinauszögert, an dem der Cr-Gehalt unter der kritischen Grenze ist und sich andere Oxide als $Cr_2O_3$ bilden, was z.B. eisenhaltige und nickelhaltige Oxide sind. Eine weitere Steigerung der Hochtemperaturkorrosionsbeständigkeit lässt sich durch Zugaben von Aluminium und Silizium erreichen. Ab einem gewissen Mindestgehalt bilden diese Elemente eine geschlossene Schicht unterhalb der Chromoxidschicht und verringern so den Verbrauch an Chrom.

Die Warmfestigkeit / Kriechbeständigkeit bei den angegebenen Temperaturen wird u. a. durch einen hohen Kohlenstoffgehalt verbessert.

Beispiele zu diesen Legierungen sind in Tabelle 1 aufgelistet.

Legierungen wie N06025, N06693 oder N06603 sind für ihre hervorragende Korrosionsbeständigkeit im Vergleich zu N06600, N06601 oder N06690 auf Grund des hohen Aluminiumgehalts bekannt. Auch zeigen Legierungen wie N06025 oder N06603 auf Grund des hohen Kohlenstoffgehalts eine hervorragende Warmfestigkeit/Kriechbeständigkeit selbst bei Temperaturen oberhalb von 1000 °C. Allerdings wird z. B. durch diese hohen Aluminiumgehalte die Verarbeitbarkeit, z. B. Umformbarkeit und Schweißbarkeit, beeinträchtigt, wobei die Beeinträchtigung umso stärker ist, je höher der Aluminiumgehalt ist (N06693). Gleiches gilt in erhöhtem Maß für Silizium, das niedrig schmelzende intermetallische Phasen mit Nickel bildet. Für N06025 konnte z. B. die Schweißbarkeit durch die Verwendung eines speziellen Schweißgases (Ar mit 2% Stickstoff) erreicht werden (Datenblatt Nicrofer 6025 HT, ThyssenKrupp VDM). Der hohe Kohlenstoffgehalt in N06025 und N06603 hat einen hohen Gehalt an Primärkarbiden zur Folge, der z. B. bei großen Umformgraden, wie sie z. B. beim Tiefziehen vorkommen, zur Rissbildung, ausgehend von den Primärkarbiden, führt. Ähnliches passiert bei der Herstellung von nahtlosen Rohren. Auch hier verschärft sich das Problem mit steigendem Kohlenstoffgehalt, insbesondere bei N06025.

Die EP 0 508 058 A1 offenbart eine austenitische Nickel-Chrom-Eisen-Legierung, bestehend aus (in Gewichts-%) C 0,12 - 0,3 %, Cr 23 - 30 %, Fe 8 - 11 %, Al 1,8 - 2,4 %, Y 0,01 - 0,15 %, Ti 0,01 - 1,0 %, Nb 0,01 - 1,0 %, Zr 0,01 - 0,2 %, Mg 0,001 - 0,015 %, Ca 0,001 - 0,01 %, N max. 0,03 %, Si max. 0,5 %, Mn max. 0,25 %, P max. 0,02 %, S max. 0,01 %, Ni Rest einschließlich unvermeidbarer erschmelzungsbedingter Verunreinigungen.

Die EP 0 549 286 offenbart eine hochtemperaturbeständige Ni-Cr-Legierung, beinhaltend 55 - 65 % Ni, 19 - 25 %, Cr 1 - 4,5 % Al, 0,045 - 0,3 % Y, 0,15 - 1 % Ti, 0,005 - 0,5 % C, 0,1 - 1,5 % Si, 0 - 1 % Mn und mindestens 0,005 % in Summe mindestens eines der Elemente der Gruppe die Mg, Ca, Ce enthält, < 0,5 % in Summe Mg + Ca, < 1 % Ce, 0,0001 - 0,1 % B, 0 - 0,5 % Zr, 0,0001 - 0,2 % N, 0 - 10 % Co, Rest Eisen und Verunreinigungen.

Durch die DE 600 04 737 T2 ist eine hitzebeständige Nickelbasislegierung bekannt geworden, beinhaltend ≤ 0,1 % C, 0,01 - 2 % Si, ≤ 2 % Mn, ≤ 0,005 % S, 10 - 25 % Cr, 2,1 - < 4,5 % Al, ≤ 0,055 % N, insgesamt 0,001 - 1 % mindestens eines der Elemente B, Zr, Hf, wobei die genannten Elemente in folgenden Gehalten vorhanden sein können: B ≤ 0,03 %, Zr ≤ 0,2 %, Hf< 0,8 %. Mo 0,01 - 15 %, W 0,01 - 9 %, wobei ein Gesamtgehalt Mo+W von 2,5 - 15 % gegeben sein kann, Ti 0-3 %, Mg 0 - 0,01 %, Ca 0 - 0,01 %, Fe 0 - 10 %, Nb 0 - 1 %, V 0 - 1 %, Y 0 - 0,1 %, La 0 - 0,1 %, Ce 0 - 0,01 %, Nd 0 - 0,1 %, Cu 0 - 5 %, Co 0 - 5 %, Rest Nickel. Für Mo und W muss die folgende Formel erfüllt sein:

$$2,5 \leq Mo + W \leq 15 \qquad (1)$$

Der WO 2007/149826 A2 ist eine Nickel-Chrom-Aluminium-Eisen-Legierung zu entnehmen, mit (in Gew.-%) 14,5 - 25 % Cr, 0,1 - 2,5 % Al, 7 - 22 % Fe, 0,2 - 0,5 % Si, 0,2 - 0,5 % Mn, 0,01 - 0,15 % Y, 0,05 - 0,15 % Ti, 0,005 - 0,5 % Zr, einem absoluten Gehalt an Mg + Ca von 0,01 - 0,1 %, max. 0,01 % C, 0,001 - 0,01 % B, max. 0,005 % P, max. 0,005 % S, max. 0,05 % Mo, Rest Nickel und den üblichen verfahrensbedingten Verunreinigungen. Diese Legierung soll einsetzbar sein als Elektrodenwerkstoff.

Die EP 1 717 330 A1 offenbart eine Legierung für die Verwendung als Rohr in einer aufkohlenden Gasatmosphäre, beinhaltend folgende Zusammensetzung: 15 - 35 % Cr, 30 - 75 % Ni, 0,001 - 10 % Al, 0,01 - 10 % Cu. Darüber hinaus kann die Legierung noch folgende Elemente enthalten: 0,01 - 0,6 % C, 0,01 - 5 % Si, 0,01 - 10 % Mn, max. 0,08 % P, max. 0,05 % S, 0,001 - 0,25 % N, max. 0,02 % O, Rest Fe und Verunreinigungen.

Die der Erfindung zugrunde liegende Aufgabe besteht darin, eine Legierung zu konzipieren, die bei ausreichend hohen Nickel-Chrom- und Aluminium-Gehalten

- eine gute Verarbeitbarkeit, d.h. Umformbarkeit, Tiefziehbarkeit und Schweißbarkeit
- eine gute Korrosionsbeständigkeit ähnlich der von N06025
- eine gute Warmfestigkeit / Kriechbeständigkeit

aufweist.

Diese Aufgabe wird gelöst durch die Verwendung einer Verwendung einer Nickel-Chrom-Aluminium-Eisen-Legierung, mit (in Gew.-%) 12 bis 28 % Chrom, 1,8 bis 3,0 % Aluminium, 1,0 bis 15 % Eisen, 0,01 bis 0,5 % Silizium, 0,005 bis 0,5 % Mangan, 0,01 bis 0,20 % Yttrium, 0,02 bis 0,60 % Titan, 0,01 bis 0,2 % Zirkon, 0,0002 bis 0,05 % Magnesium, 0,0001 bis 0,05 % Kalzium, 0,03 bis 0,11 % Kohlenstoff, 0,003 bis 0,05 % Stickstoff, 0,0005 bis 0,008 % Bor, 0,0001 - 0,010 % Sauerstoff, 0,001 bis 0,030 % Phosphor, max. 0,010 % Schwefel, max. 0,5 % Molybdän, max. 0,5 % Wolfram, bedarfsweise enthaltend 0,01 bis 5,0 % Co und maximal 0,1 % Vanadium, Rest Nickel und den üblichen verfahrensbedingten Verunreinigungen, worin die Verunreinigungen in Gehalten von max. 0,5 % Cu, max. 0,002 % Pb, max. 0,002 % Zn, max. 0,002 % Sn eingestellt sind, als Elektrodenwerkstoff, wobei die folgenden Beziehungen erfüllt sein müssen:

$$0 < 7{,}7\,C - x \bullet a < 1{,}0 \qquad\qquad (2)$$

mit

$$a = PN, \quad \text{wenn } PN > 0 \qquad\qquad (3a)$$

bzw.

$$a = 0, \quad \text{wenn } PN \leq 0 \qquad\qquad (3b)$$

und

$$x = (1{,}0\,Ti + 1{,}06\,Zr)/(0{,}251\,Ti + 0{,}132\,Zr) \qquad\qquad (3c)$$

wobei

$$PN = 0{,}251\,Ti + 0{,}132\,Zr - 0{,}857\,N \qquad\qquad (4)$$

und Ti, Zr, N, C die Konzentration der betreffenden Elemente in Masse-% sind.

Vorteilhafte Weiterbildungen des Erfindungsgegenstandes sind den zugehörigen Unteransprüchen zu entnehmen.

Bevorzugt kommt die Legierung zum Einsatz als Elektrodenwerkstoff für Zündkerzen von Benzinmotoren.

Der Spreizungsbereich für das Element Chrom liegt zwischen 12 und 28 %, wobei in Abhängigkeit vom Einsatzfall Chromgehalte wie folgt gegeben sein können und abhängig vom Einsatzfall in der Legierung eingestellt werden.

Bevorzugte Bereiche werden wie folgt wiedergegeben:

- 16 bis 28 %
- 20 bis 28 %
- > 24 bis 27 %
- 19 bis 24%

Der Aluminiumgehalt liegt zwischen 1,8 und 3,0 %, wobei auch hier, je nach Einsatzbereich der Legierung, Aluminiumgehalte wie folgt gegeben sein können:

- 1,9 bis 2,9 %
- 1,9 bis 2,5 %
- > 2,0 bis 2,5 %

Der Eisengehalt liegt zwischen 1,0 und 15 %, wobei, abhängig vom Anwendungsbereich, definierte Gehalte innerhalb des Spreizungsbereiches eingestellt werden können:

- 1,0-11,0%
- 1,0 - 7,0 %
- 7,0-11,0 %

Der Siliziumgehalt liegt zwischen 0,01 und 0,50 %. Bevorzugt kann Si innerhalb des Spreizungsbereiches wie folgt in der Legierung eingestellt werden:

- 0,01-0,20 %
- 0,01 - < 0,10 %

Gleiches gilt für das Element Mangan, das mit 0,005 bis 0,5 % in der Legierung enthalten sein kann. Alternativ ist auch folgender Spreizungsbereich denkbar:

- 0,005 - 0,20 %
- 0,005-0,10%
- 0,005 - < 0,05 %

Der Erfindungsgegenstand geht bevorzugt davon aus, dass die Werkstoffeigenschaften im Wesentlichen mit der Zugabe des Elements Yttrium in Gehalten von 0,01 bis 0,20 % eingestellt werden können. Bevorzugt kann Y innerhalb des Spreizungsbereiches wie folgt in der Legierung eingestellt werden:

- 0,01-0,15%
- 0,02-0,15%
- 0,01 -0,10 %
- 0,02-0,10 %
- 0,01 - <0,045 %.

Der Titangehalt liegt zwischen 0,02 und 0,60 %. Bevorzugt kann Ti innerhalb des Spreizungsbereiches wie folgt in der Legierung eingestellt werden:

- 0,03 - 0,30 %,
- 0,03 - 0,20 %.

Der Zirkongehalt liegt zwischen 0,01 und 0,20 %. Bevorzugt kann Zr innerhalb des Spreizungsbereiches wie folgt in der Legierung eingestellt werden:

- 0,01 - 0,15 %.
- 0,01 - 0,08 %.
- 0,01 - 0,06 %.

Auch Magnesium ist in Gehalten 0,0002 bis 0,05 % enthalten. Bevorzugt besteht die Möglichkeit, dieses Element wie folgt in der Legierung einzustellen:

- 0,0005 - 0,03 %.

Die Legierung enthält des Weiteren Kalzium in Gehalten zwischen 0,0001 und 0,05 %, insbesondere 0,0005 bis 0,02 %.
Die Legierung enthält 0,03 bis 0,11 % Kohlenstoff. Bevorzugt kann dieser innerhalb des Spreizungsbereiches wie folgt in der Legierung eingestellt werden:

- 0,04 - 0,10 %.

Dies gilt in gleicher Weise für das Element Stickstoff, das in Gehalten zwischen 0,003 und 0,05 % enthalten ist. Bevorzugte Gehalte können wie folgt gegeben sein:

- 0,005 - 0,04 %.

Die Elemente Bor und Sauerstoff sind wie folgt in der Legierung enthalten:

| - | Bor | 0,0005 - 0,008 % |
| - | Sauerstoff | 0,0001 - 0,010 %. |

Bevorzugte Gehalte können wie folgt gegeben sein:

| - | Bor | 0,0015 - 0,008 % |

Die Legierung enthält des Weiteren Phosphor in Gehalten zwischen 0,001 und 0,030 %, beinhaltet insbesondere 0,002 bis 0,020 %.

Das Element Schwefel kann wie folgt in der Legierung gegeben sein:

| - | Schwefel | max. 0,010 % |

Molybdän und Wolfram können einzeln oder in Kombination in der Legierung mit einem Gehalt von jeweils maximal 0,50 % enthalten sein. Bevorzugte Gehalte können wie folgt gegeben sein:

| - | Mo | max. 0,20 % |
| - | W | max. 0,20 % |
| - | Mo | max. 0,10 % |
| - | W | max. 0,10 % |
| - | Mo | max. 0,05 % |
| - | W | max. 0,05 % |

Es müssen die folgenden Beziehungen, die die Wechselwirkungen zwischen Ti, Zr, N und C beschreiben, erfüllt sein:

-

$$0 < 7,7\,C - x \bullet a < 1,0 \qquad (2)$$

mit

$$a = PN, \quad \text{wenn } PN > 0 \qquad (3a)$$

bzw.

$$a = 0, \quad \text{wenn } PN \leq 0 \qquad (3b)$$

und

$$x = (1,0\,Ti + 1,06\,Zr)/(0,251\,{}^*Ti + 0,132\,Zr) \qquad (3c)$$

wobei

$$PN = 0,251\ Ti + 0,132\ Zr - 0,857\ N \hspace{4em} (4)$$

und Ti, Zr, N, C die Konzentration der betreffenden Elemente in Masse-% sind.

- Ein bevorzugter Bereich kann eingestellt werden mit:

$$0 << 7,7\ C - x \bullet a < 0,90 \hspace{4em} (2a)$$

Des Weiteren kann die Legierung zwischen 0,01 bis 5,0 % Kobalt enthalten, der darüber hinaus noch wie folgt eingeschränkt werden kann:

- 0,01 bis 2,0 %
- 0,1 bis 2,0 %
- 0,01 bis 0,5 %.

Des Weiteren kann in der Legierung maximal 0,1% Vanadium enthalten sein.

Schließlich können an Verunreinigungen noch die Elemente Kupfer, Blei, Zink und Zinn in Gehalten wie folgt gegeben sein:

| | |
|---|---|
| Cu | max. 0,50 % |
| Pb | max. 0,002 % |
| Zn | max. 0,002 % |
| Sn | max. 0,002 % |

Der Gehalt an Kupfer kann darüber hinaus wie folgt eingeschränkt werden:

| | |
|---|---|
| Cu | kleiner 0,015 % |

Die erfindungsgemäße Legierung wird bevorzugt offen erschmolzen, gefolgt von einer Behandlung in einer VOD oder VLF Anlage. Nach Abguss in Blöcken oder als Strangguss wird die Legierung in die gewünschte Halbzeugform warm umgeformt, ggf. mit Zwischenglühungen zwischen 900°C und 1270°C für 2 h bis 70 h. Die Oberfläche des Materials kann ggf. (auch mehrmals) zwischendurch und/oder am Ende zur Säuberung chemisch und/oder mechanisch abgetragen werden. Nach Ende der Warmformgebung kann ggf. eine Kaltformgebung mit Umformgraden bis zu 98% in die gewünschte Halbzeugform, ggf. mit Zwischenglühungen zwischen 800°C und 1250°C für 0,1 min bis 70 h, ggf. unter Schutzgas, wie z. B. Argon oder Wasserstoff, gefolgt von einer Abkühlung an Luft, in der bewegten Glühatmosphäre oder im Wasserbad erfolgen. Danach findet eine Glühung im Temperaturbereich von 800°C bis 1250°C für 0,1 min bis 70 h, ggf. unter Schutzgas, wie z. B. Argon oder Wasserstoff, gefolgt von einer Abkühlung an Luft, in der bewegten Glühatmosphäre oder im Wasserbad statt. Ggf. können zwischendurch chemische und/oder mechanische Reinigungen der Materialoberfläche erfolgen.

Die erfindungsgemäße Legierung lässt sich gut in den Produktformen Band, insbesondere in Dicken von 100 $\mu$m bis 4 mm, Blech, insbesondere in Dicken von 1 mm bis 70 mm, Stange, insbesondere in Dicken von 10 mm bis 500 mm, und Draht insbesondere in Dicken von 0,1 m bis 15 mm herstellen und verwenden.

Diese Produktformen werden mit einer mittleren Korngröße von 4 $\mu$m bis 600 $\mu$m hergestellt. Der bevorzugte Bereich liegt zwischen 10 $\mu$m und 200 $\mu$m.

Die erfindungsgemäße Legierung eignet sich auf Grund ihrer hervorragenden Korrosionsbeständigkeit und Ihrer guten Umformbarkeit auch für die Verwendung als Elektrodenmaterial z. B in Zündelementen in Verbrennungsmaschinen, insbesondere als Zündkerze in Benzinmotoren. Besonders gut geeignet ist sie für die Verwendung als Trägermaterial in einer Elektrode mit Edelmetallspitze zum Beispiel der Edelmetallzündkerze.

Die erfindungsgemäße Legierung ist gut geeignet für die Herstellung von Tiefziehteilen.

Durchgeführte Tests:

Die Verformbarkeit wird in einem Zugversuch nach DIN EN ISO 6892-1 bei Raumtemperatur bestimmt. Dabei wird die Dehngrenze $R_{p0,2}$, die Zugfestigkeit $R_m$ und die Dehnung A bis zum Bruch bestimmt. Die Dehnung A wird an der gebrochenen Probe aus der Verlängerung der ursprünglichen Messstrecke $L_0$ bestimmt:

$$A = (L_U-L_0)/L_0 \ 100 \ \% = \Delta L / \ L_0 \ 100\%$$

Mit $L_u$ = Messlänge nach dem Bruch.

Je nach Messlänge wird die Bruchdehnung mit Indizes versehen:

Z. B. ist für $A_5$ die Messlänge $L_0$ = 5·$d_0$ mit $d_0$ = Anfangsdurchmesser einer Rundprobe

Die Versuche wurden an Rundproben mit einen Durchmesser von 6 mm im Messbereich und einer Messlänge $L_0$ von 30 mm durchgeführt. Die Probennahme erfolgte quer zur Umformrichtung des Halbzeuges. Die Umformgeschwindigkeit betrug bei $R_{p0,2}$ 10 MPA/s und bei $R_m$ 6,7 $10^{-3}$ 1/s (40%/min).

Die Größe der Dehnung A im Zugversuch bei Raumtemperatur kann als Maß für die Verformbarkeit genommen werden. Ein gut verarbeitbarer Werkstoff sollte eine Dehnung von mindestens 50 % haben.

Die Schweißbarkeit wird hier über das Ausmaß der Bildung von Heißrissen beurteilt (siehe DVS Merkblatt 1004-1). Je größer die Gefahr der Bildung von Heißrissen, desto schlechter ist ein Werkstoff schweißbar. Die Heißrissanfälligkeit wurde mit dem Modifizierte Varestraint Transvarestraint Test (MVT-Test) an der Bundesanstalt für Materialforschung und -prüfung getestet (siehe DVS Merkblatt 1004-2). Bei einem MVT Test wird auf der Oberseite einer Werkstoffprobe mit den Maßen 100 mm x 40 mm x 10 mm der Länge nach vollmechanisiert eine WIG-Naht mit konstanter Vorschubgeschwindigkeit gelegt. Wenn der Lichtbogen die Mitte der Probe passiert, wird auf diese eine definierte Biegedehnung aufgebracht, indem die Probe mittels Gesenken um eine Matrize mit bekanntem Radius gebogen wird. In dieser Phase des Biegens bilden sich Heißrisse in einer örtlich begrenzten Prüfzone auf der MVT-Probe. Für die Messungen wurden die Proben längs zur Schweißrichtung gebogen (Varestraint) Es wurden Versuche mit 1 % und 4 % Biegedehnung, einer Gesenkgeschwindigkeit von 2 mm/s, mit einer Streckenenergie von 7,5 kJ/cm jeweils unter Argon 5.0 und Argon mit 3 % Stickstoff durchgeführt. Die Heißrissresistenz wird wie folgt quantifiziert: es werden die Längen aller Erstarrungs- und Wiederaufschmelzrisse, die in einem Lichtmikroskop bei 25facher Vergrößerung auf der Probe sichtbar sind, aufsummiert. Auf die gleiche Art und Weise werden die Risse durch Verformbarkeitsabfall (DDC = Ductility Dip Cracks) ermittelt. Anhand dieser Ergebnisse lässt sich dann der Werkstoff wie folgt in die Kategorien "heißrisssicher", "zunehmende Heißrissneigung" und "heißrissgefährdet" einteilen.

| Bei Biegedehnung | Gesamtlänge Erstarrungs- und Wiederaufschmelzrisse in mm | | |
| --- | --- | --- | --- |
| | heißrisssicher | zunehmende Heißrissneigung | heißrissgefährdet |
| 1 % | $\leq$ 0 | $\leq$ 7,5 | > 7,5 |
| 4 % | $\leq$ 15 | $\leq$ 30 | > 30 |

Alle Werkstoffe, die beim MVT Test im Bereich "heißrisssicher" und "zunehmende Heißrissneigung" liegen, gelten in den folgenden Untersuchungen als schweißbar.

Die Korrosionsbeständigkeit bei höheren Temperaturen wurde in einem Oxidationstest bei 1100°C an Luft bestimmt, wobei der Versuch alle 96 Stunden unterbrochen und die Massenänderungen der Proben durch die Oxidation bestimmt wurde (Nettomassenänderung $m_N$). Die spezifische (Netto-) Massenänderung ist die auf die Oberfläche der Proben bezogene Massenänderung. Es wurden von jeder Charge 3 Proben ausgelagert.

Die Warmfestigkeit wird in einem Warmzugversuch nach DIN EN ISO 6892-2 bestimmt. Dabei wird die Dehngrenze $R_{p0,2}$, die Zugfestigkeit $R_m$ und die Dehnung A bis zum Bruch analog zum Zugversuch bei Raumtemperatur (DIN EN ISO 6892-1) bestimmt.

Die Versuche wurden an Rundproben mit einem Durchmesser von 6 mm im Messbereich und einer Anfangsmesslänge $L_0$ von 30 mm durchgeführt. Die Probennahme erfolgte quer zur Umformrichtung des Halbzeuges. Die Umformgeschwindigkeit betrug bei $R_{p0,2}$ 8,33 $10^{-5}$ 1/s (0,5 %/min) und bei $R_m$ 8,33 $10^{-4}$ 1/s (5 %/min).

Die Probe wird bei Raumtemperatur in eine Zugprüfmaschine eingebaut und ohne Belastung mit einer Zugkraft auf die gewünschte Temperatur aufgeheizt. Nach Erreichen der Prüftemperatur wird die Probe ohne Belastung eine Stunde (600 °C) bzw. zwei Stunden (700 °C bis 1100 °C) für einen Temperaturausgleich gehalten. Danach wird die Probe mit einer Zugkraft so belastet, dass die gewünschten Dehngeschwindigkeiten eingehalten werden, und die Prüfung beginnt.

Die Kriechbeständihkeit wird über einen Langsam-Zugversuch (SSRT = Slow Strain Rate Test) bestimmt. Dafür wird ein Warmzugversuch nach DIN EN ISO 6892-2 mit sehr geringen Umformgeschwindigkeiten von 1,0 x $10^{-6}$ 1/s durchgeführt. Diese Dehngeschwindigkeit liegt schon im Bereich der Kriechgeschwindigkeiten, so dass mit Hilfe eines Vergleichs von Dehngrenze und insbesondere Zugfestigkeit aus einem Langsam-Zugversuch ein Ranking von Werkstoffen in Bezug auf die Kriechfestigkeit durchgeführt werden kann.

Die Dehngrenze $R_{p0,2}$, die Zugfestigkeit $R_m$ und die Dehnung A bis zum Bruch werden analog zu dem beim Zugversuch bei Raumtemperatur (DIN EN ISO 6892-1) beschriebenen Verfahren bestimmt. Zur Reduzierung der Versuchszeiten wurden die Versuche nach ca. 30 % Dehnung abgebrochen, wenn $R_m$ erreicht worden ist, sonst nach Überschreitung der Dehnung A für $R_m$. Die Versuche wurden an Rundproben mit einen Durchmesser von ca. 8 mm im Messbereich und einer Messlänge $L_0$ von 40 mm durchgeführt. Die Probennahme erfolgte quer zur Umformrichtung des Halbzeuges.

Die Probe wird bei Raumtemperatur in eine Zugprüfmaschine eingebaut und ohne Belastung mit einer Zugkraft auf die gewünschte Temperatur aufgeheizt. Nach Erreichen der Prüftemperatur wird die Probe ohne Belastung zwei Stunden (700 °C bis 1100 °C) für einen Temperaturausgleich gehalten. Danach wird die Probe mit einer Zugkraft so belastet, dass die gewünschten Dehngeschwindigkeiten eingehalten werden, und die Prüfung beginnt.

Beispiele:

Die Tabellen 2a und 2b zeigen die Zusammensetzung der untersuchten Legierungen.

Die Legierungen N06025 und N06601 sind Legierungen nach dem Stand der Technik. Die erfindungsgemäße Legierung ist mit "E" bezeichnet. Die Analysen der Legierungen N06025 und N06601 liegen in den in Tabelle 1 angegebenen Bereichen. Die erfindungsgemäße Legierung "E" hat einen C-Gehalt der in der Mitte zwischen N06025 und N06601 liegt. In der Tabelle 2a ist außerdem PN und 7,7 C - x • a gemäß der Formeln 2 und 4 angegeben. PN ist für alle Legierungen in Tabelle 2a größer Null. 7,7 C - x • a liegt mit 0,424 für die erfindungsgemäße Legierung genau im bevorzugtem Bereich 0 < 7,7 C - x • a < 1,0.

Für die Legierung nach dem Stand der Technik N06025 ist 7,7 C - x • a größer 1,0 und damit zu groß.

Für die Legierung nach dem Stand der Technik N06601 ist 7,7 C - x • a kleiner Null und damit zu klein.

Für diese Beispielchargen werden die folgenden Eigenschaften verglichen:

- Die Umformbarkeit anhand des Zugversuches bei Raumtemperatur
- Die Schweißbarkeit mit Hilfe des MVT-Testes
- Die Korrosionsbeständigkeit mit Hilfe eines Oxidationstestes
- Die Warmfestigkeit mit Warmzugversuchen
- Die Kriechbeständigkeit mit Hilfe eines Rankings von Ergebnissen aus Langsam-Zugversuchen.

Tabelle 3 zeigt die Ergebnisse des Zugversuchs bei Raumtemperatur. Die erfindungsgemäße Legierung "E" zeigt mit einer Dehnung von über 80% eine Dehnung, die weitaus größer ist, als die von N06025 und N06601. Dies ist für N06025 nicht erstaunlich auf Grund des hohen Kohlenstoffgehaltes von 0,17 % der beiden Beispielschargen 163968 und 160483. Beide Chargen zeigen ihre schlechtere Verformbarkeit durch eine Dehnung kleiner 50 %. Für N06601 ist dies aber bemerkenswert, da die Chargen 314975 und 156656 einen KohlenstoffGehalt von 0,045 bzw. 0,053 % haben, was deutlich niedriger ist, als der der erfindungsgemäßen Legierung mit 0,075%, und auch, wie zu erwarten, eine Dehnung größer 50% haben. Dies zeigt, dass bei Einhaltung des Bereichs für Grenzen für 0 <7,7 C - x • a < 1,0 sich eine über den Stand der Technik hinausgehende Verformbarkeit ergibt.

Tabelle 4 zeigt die Ergebnisse der MVT Tests. N06601 ist mit beiden Gasen Argonr und Argon mit 3% Stickstoff schweißbar, da alle gemessenen Gesamtrisslängen für 1 % Biegedehnung kleiner 7,5 mm und alle gemessenen Gesamtrisslängen für 4 % Biegedehnung kleiner 30 mm sind. Für N06025 und die erfindungsgemäße Legierung "E" sind die gemessenen Gesamtrisslängen größer 7,5 mm (1 % Biegedehnung) bzw. 30 mm (4 % Biegedehnung), so dass diese Legierungen mit Argon nicht schweißbar sind. Für Argon mit 3% Stickstoff liegen die gemessenen Gesamtrisslängen aber deutlich unterhalb von 7,5 mm (1 % Biegedehnung) bzw. 30 mm (4 % Biegedehnung), so dass sich N06025 und die erfindungsgemäße Legierung "E" mit Argon mit 3% Stickstoff schweißen lassen.

Bild 1 zeigt die Ergebnisse des Oxidationsversuchs bei 1100 °C an Luft. Aufgetragen ist die spezifische (Netto-) Massenänderung der Proben (Mittelwert der 3 Proben einer jeden Charge) in Abhängigkeit von der Auslagerungszeit. Die N06601 Charge zeigt von Anfang an eine negative spezifische Massenänderung, was durch starke Abplatzungen und Abdampfungen von Chromoxid verursacht wird. Bei N06025 und der erfindungsgemäßen Legierung "E" zeigt sich zu Anfang ein leichter Anstieg in der Massenänderung, gefolgt von einer sehr mäßigen Abnahme mit der Zeit. Dies zeigt, dass beide Legierungen bei 1100°C eine geringe Oxidationsrate und nur wenige Abplatzungen haben. Das Verhalten der erfindungsgemäßen Legierung "E" ist, wie gefordert, dem von N06025 vergleichbar.

Tabelle 5 zeigt die Ergebnisse der Warmzugversuche bei 600°C, 700 °C, 800 °C, 900 °C und 1100 °C. Die höchsten Werte sowohl beim $R_{p0,2}$ als auch bei $R_m$ zeigen, wie zu erwarten, N06025 und die niedrigsten Werte N06601. Die Werte der erfindungsgemäßen Legierung "E" liegen dazwischen, wobei bei 800°C sowohl bei $R_{p0,2}$ als auch bei $R_m$ die Werte der erfindungsgemäßen Legierung "E" größer sind, als die von N06025. Die Dehnungen bei den Warmzugversuchen sind für alle Legierungen ausreichend groß. Bei 1100°C lassen sich auf Grund der Messgenauigkeit keine Unterschiede zwischen der erfindungsgemäßen Legierung "E" und N06601 mehr feststellen.

Tabelle 6 zeigt die Ergebnisse der Langsam-Zugversuche bei 700 °C, 800 °C und 1100 °C. Die höchsten Werte sowohl beim $R_{p0,2}$ als auch bei $R_m$ zeigt, wie zu erwarten, N06025 und die niedrigsten Werte N06601. Die Werte der erfindungsgemäßen Legierung "E" liegen für $R_{p0,2}$ dazwischen, für $R_m$ bei 700 °C und 800 °C sind sie besser oder nahezu gleich gut wie bei N06025. Die Dehnungen bei den Langsamzugversuchen sind für alle Legierungen ausreichend groß. Bei 1100 °C lassen sich auf Grund der Messgenauigkeit keine Unterschiede zwischen der erfindungsgemäßen Legierung "E" und N06601 mehr feststellen.

Bei 700 °C und 800 °C ist $R_m$ aus den Langsamzugversuchen von N06025 und der erfindungsgemäßen Legierung "E" vergleichbar, d.h. es kann erwartet werden, dass bei diesen Temperaturen die Kriechfestigkeit von N06025 und die der erfindungsgemäßen Legierung "E" vergleichbar ist. Dies zeigt, dass für Legierungen in dem bevorzugten Bereich 0 <7,7 C - x • a < 1,0 $R_m$ die Kriechbeständigkeit vergleichbar der von Nicrofer 6025 HT ist, bei gleichzeitig guter Verarbeitbarkeit der erfindungsgemäßen Legierung "E" im Vergleich zu N06025.

Die beanspruchten Grenzen für die erfindungsgemäße Legierung "E" lassen sich daher im Einzelnen wie folgt begründen:

Die Kosten für die Legierung steigen mit der Reduzierung des Eisen-Gehalts. Unterhalb von 1 % steigen die Kosten überproportional, da spezielles Vormaterial eingesetzt werden muss. Deshalb ist 1 % Fe aus Kostengründen als untere Grenze anzusehen.

Mit Erhöhung des Eisengehalts verringert sich die Phasenstabilität (Bildung von versprödenden Phasen), insbesondere bei hohen Chrom- und Aluminiumgehalten. Deshalb ist 15 % Fe eine sinnvolle obere Grenze für die erfindungsgemäße Legierung.

Zu geringe Cr-Gehalte bedeuten, dass die Cr-Konzentration sehr schnell unter die kritische Grenze sinkt. Deshalb ist 12 % Cr die untere Grenze für Chrom. Zu hohe Cr-Gehalte verschlechtern die Verarbeitbarkeit der Legierung. Deshalb ist 28 % Cr als obere Grenze anzusehen.

Die Bildung einer Aluminiumoxidschicht unterhalb der Chromoxidschicht verringert die Oxidationsrate. Unterhalb von 1,8 % Al ist die Aluminiumoxidschicht zu lückenhaft, um ihre Wirkung voll zu entfalten. Zu hohe Al-Gehalte beeinträchtigen die Verarbeitbarkeit der Legierung. Deshalb bildet ein Al-Gehalt von 3,0 % die obere Grenze.

Si wird bei der Herstellung der Legierung benötigt. Es ist deshalb ein Mindestgehalt von 0,01 % notwendig. Zu hohe Gehalte wiederum beeinträchtigen die Verarbeitbarkeit. Der Si-Gehalt ist deshalb auf 0,5 % beschränkt.

Es ist ein Mindestgehalt von 0,005 % Mn zur Verbesserung der Verarbeitbarkeit notwendig. Mangan wird auf 0,5 % begrenzt, da dieses Element die Oxidationsbeständigkeit ebenfalls reduziert.

Wie schon erwähnt verbessern Zusätze von Sauerstoff affinen Elementen die Oxidationsbeständigkeit. Sie tun dies, indem sie in die Oxidschicht mit eingebaut werden und dort auf den Korngrenzen die Diffusionswege des Sauerstoffs blockieren.

Es ist ein Mindestgehalt von 0,01 % Y notwendig, um die die Oxidationsbeständigkeit steigernde Wirkung des Y zu erhalten. Die Obergrenze wird aus Kostengründen bei 0,20 % gelegt.

Titan steigert die Hochtemperaturfestigkeit. Es sind mindestens 0,02 % notwendig, um eine Wirkung zu erzielen. Ab 0,6 % kann das Oxidationsverhalten verschlechtert werden.

Es ist ein Mindestgehalt von 0,01 % Zr notwendig, um die die Hochtemperaturfestigkeit und die Oxidationsbeständigkeit steigernde Wirkung des Zr zu erhalten. Die Obergrenze wird aus Kostengründen bei 0,20 % Zr gelegt.

Schon sehr geringe Mg-Gehalte verbessern die Verarbeitung durch das Abbinden von Schwefel, wodurch das Auftreten von niedrig schmelzenden NiS Eutektika vermieden wird. Für Mg ist deshalb ein Mindestgehalt von 0,0002 %erforderlich. Bei zu hohen Gehalten können intermetallische Ni-Mg-Phasen auftreten, die die Verarbeitbarkeit wieder deutlich verschlechtern. Der Mg-Gehalt wird deshalb auf 0,05 % begrenzt.

Genauso wie Mg verbessern auch schon sehr geringe Ca-Gehalte die Verarbeitung durch das Abbinden von Schwefel, wodurch das Auftreten von niedrig schmelzenden NiS Eutektika vermieden wird. Für Ca ist deshalb ein Mindestgehalt von 0,0001 % erforderlich. Bei zu hohen Gehalten können intermetallische Ni-Ca-Phasen auftreten, die die Verarbeitbarkeit wieder deutlich verschlechtern. Der Ca-Gehalt wird deshalb auf 0,05 % begrenzt.

Es ist ein Mindestgehalt von 0,03 % C für eine gute Kriechbeständigkeit notwendig. C wird auf 0,11 % begrenzt, da dieses Element die Verarbeitbarkeit reduziert.

Es ist ein Mindestgehalt von 0,003 % N erforderlich, wodurch die Verarbeitbarkeit des Werkstoffs verbessert wird. N wird auf 0,05 % begrenzt, da dieses Element die Oxidationsbeständigkeit reduziert.

Bor verbessert die Kriechbeständigkeit. Deshalb sollte ein Gehalt von mindestens 0,0005 % vorhanden sein. Gleichzeitig verschlechtert dieses grenzflächenaktive Element die Oxidationsbeständigkeit. Es werden deshalb max. 0,008 % Bor festgelegt.

Der Sauerstoffgehalt muss kleiner 0,010 % sein um die Herstellbarkeit der Legierung zu gewährleisten. Zu kleine Sauerstoff-Gehalte verursachen erhöhte Kosten. Der Sauerstoffgehalt sollte deshalb größer 0,0001 % sein.

Der Gehalt an Phosphor sollte kleiner 0,030 % sein, da dieses grenzflächenaktive Element die Oxidationsbeständigkeit beeinträchtigt. Ein zu niedriger P-Gehalt erhöht die Kosten. Der P-Gehalt ist deshalb ≥ 0,001 %.

Die Gehalte an Schwefel sollten so gering wie möglich eingestellt werden, da dieses grenzflächenaktive Element die Oxidationsbeständigkeit beeinträchtigt. Es werden deshalb max. 0,010 % S festgelegt.

Molybdän wird auf max. 0,5 % begrenzt, da dieses Element die Oxidationsbeständigkeit reduziert.

Wolfram wird auf max. 0,5 % begrenzt, da dieses Element die Oxidationsbeständigkeit ebenfalls reduziert.

Die folgende Formel beschreibt die Wechselwirkung von C, N, Ti, Zr und in der Legierung:

$$0 < 7,7\ C - x \bullet a < 1,0 \qquad (2)$$

mit

$$a = PN, \quad \text{wenn } PN > 0 \qquad (3a)$$

bzw.

$$a = 0, \quad \text{wenn } PN \leq 0 \qquad (3b)$$

und

$$x = (1,0\ Ti + 1,06\ Zr)/(0,251\ Ti + 0,132\ Zr \qquad (3c)$$

$$PN = 0,251\ Ti + 0,132\ Zr - 0,857\ N \qquad (4)$$

und Ti, Zr, N, C die Konzentration der betreffenden Elemente in Masse-% sind.

Wenn 7,7 C - x • a größer 1,0 ist, entstehen so viele Primärkarbide, die die Umformbarkeit beeinträchtigen. Wenn 7,7 C - x • a kleiner 0 ist verschlechtern sich Warmfestigkeit und Kriechbeständigkeit.

Kobalt kann in dieser Legierung bis zu 5,0 % enthalten sein. Höhere Gehalte reduzieren die Oxidationsbeständigkeit merklich. Ein zu niedriger Kobalt-Gehalt erhöht die Kosten. Der Co-Gehalt ist deshalb ≥ 0,01 %.

Vanadium wird auf max. 0,1 % begrenzt, da dieses Element die Oxidationsbeständigkeit reduziert.

Kupfer wird auf max. 0,5 % begrenzt, da dieses Element die Oxidationsbeständigkeit reduziert.

Pb wird auf max. 0,002 % begrenzt, da dieses Element die Oxidationsbeständigkeit reduziert. Das Gleiche gilt für Zn und Sn.

Tabelle 1: Legierungen nach ASTM B 168-08. Alle Angaben in Masse-%

| Legierung | Ni | Cr | Co | Mo | Nb | Fe | Mn | Al | C | Cu | Si | S | Ti | P | Zr | Y | B | N | Ce |
|---|---|---|---|---|---|---|---|---|---|---|---|---|---|---|---|---|---|---|---|
| N06600 | 72,0 min | 14,0-17,0 | | | | 6,0-10,0 | 1,0 max | | 0,15 max | 0,5 max | 0,5 max | 0,015 max | | | | | | | |
| N06601 | 58,0-63,0 | 21,0-25,0 | | | | R | 1,0 max | 1,0-1,7 | 0,10 max | 0,5 max | 0,5 max | 0,015 max | | | | | | | |
| N06617 | 44,5 min | 20,0-24,0 | 10,0-15,0 | 8,0-10,0 | | 3,0 max | 1,0 max | 0,8-1,5 | 0,05-0,15 | 1,0 max | 0,5 max | 0,015 max | 0,6 max | | | | 0,006 max | | |
| N06690 | 58,0 min | 27,0-31,0 | | | | 7,0-11,0 | 0,5 max | | 0,05 max | 0,5 max | 1,0 max | 0,015 max | | | | | | | |
| N06693 | R | 27,0-31,0 | | | 0,5-2,5 | 2,5-6,0 | 1,0 max | 2,5-4,0 | 0,15 max | 0,5 max | 0,5 max | 0,01 max | 1,0 max | | | | | | |
| N06025 | R | 24,0-26,0 | | | | 8,0-11,0 | 0,15 max | 1,8-2,4 | 0,15-0,25 | 0,1 max | 0,5 max | 0,010 max | 0,1-0,2 | 0,020 max | 0,01-0,10 | 0,05-0,12 | | | |
| N06045 | 45 min | 26,0-29,0 | | | | 21,0-25,0 | 1,0 max | | 0,05-0,12 | 0,3 max | 2,5-3,0 | 0,010 max | | 0,020 max | | | | | 0,03-0,09 |
| N06603 | R | 24,0-26,0 | | | | 8,0-11,0 | 0,15 max | 2,4-3,0 | 0,20-0,40 | 0,50 max | 0,5 max | 0,010 max | 0,01-0,25 | 0,020 max | 0,01-0,10 | 0,01-0,15 | | | |
| N06696 | R | 28,0-32,0 | | 1,0-3,0 | | 2,0-6,0 | 1,0 max | | 0,15 max | 1,5-3,0 | 1,0-2,5 | 0,010 max | 1,0 max | | | | | | |

Tabelle 2a: Zusammensetzung der untersuchten Legierungen, Teil 1. Alle Angaben in Masse-%

| Legierung | Charge | C | S | N | Cr | Ni | Mn | Si | Ti | Fe | P | Al | Zr | Y | Hf | 7,7C-x•a | PN |
|---|---|---|---|---|---|---|---|---|---|---|---|---|---|---|---|---|---|
| N06025 | 163968 | 0,170 | 0,002 | 0,023 | 25,4 | 62,1 | 0,07 | 0,07 | 0,13 | 9,5 | 0,008 | 2,25 | 0,08 | 0,08 | - | 1,192 | 0,0235 |
| N06025 | 160483 | 0,172 | <0,002 | 0,025 | 25,7 | 62,0 | 0,06 | 0,05 | 0,14 | 9,4 | 0,007 | 2,17 | 0,09 | 0,07 | - | 1,196 | 0,0256 |
| E | 126251 | 0,075 | 0,003 | 0,023 | 25,3 | 62,0 | 0,02 | 0,05 | 0,18 | 9,8 | 0,003 | 2,27 | 0,06 | 0,07 | <0,01 | 0,424 | 0,0334 |
| N06601 | 314975 | 0,045 | <0,002 | 0,011 | 23,1 | 59,3 | 0,58 | 0,34 | 0,47 | 14,6 | 0,007 | 1,33 | 0,02 | - | - | -0,101 | 0,1105 |
| N06601 | 156656 | 0,053 | 0,002 | 0,018 | 23,0 | 59,6 | 0,72 | 0,24 | 0,47 | 14,4 | 0,008 | 1,34 | 0,02 | - | - | -0,015 | 0,1045 |
| N06601 | 156125 | 0,052 | 0,002 | 0,017 | 23 | 60,2 | 0,58 | 0,38 | 0,45 | 13,2 | 0,009 | 1,30 | 0,02 | - | - | -0,007 | 0,100 |

Tabelle 2b: Zusammensetzung der untersuchten Legierungen, Teil 2. Alle Angaben in Masse-%

| Legierung | Charge | Mo | Nb | Cu | Mg | Ca | V | W | Co | La | B | Ta | Ce | O |
|-----------|--------|------|-------|------|--------|-------|-------|-------|------|-------|-------|-------|-------|--------|
| N06025 | 163968 | 0,01 | <0,01 | 0,01 | 0,011 | 0,002 | 0,03 | - | 0,05 | - | 0,005 | - | - | 0,0009 |
| N06025 | 160483 | 0,02 | 0,01 | 0,01 | 0,01 | 0,002 | - | - | 0,04 | - | 0,003 | - | - | - |
| E | 126251 | <0,01 | <0,01 | 0,01 | 0,013 | 0,002 | <0,01 | <0,01 | 0,04 | <0,01 | 0,003 | <0,01 | <0,01 | 0,0013 |
| N06601 | 314975 | 0,03 | 0,02 | 0,04 | <0,001 | <0,01 | 0,04 | <0,01 | 0,03 | - | 0,002 | - | 0 | 0,0006 |
| N06601 | 156656 | 0,04 | 0,01 | 0,04 | 0,012 | <0,01 | 0,03 | 0,01 | 0,04 | - | 0,001 | - | 0 | 0,0001 |
| N06601 | 156125 | 0,02 | 0,06 | 0,01 | 0,015 | <0,01 | 0,03 | - | 0,04 | - | - | - | - | - |

Tabelle 3:Ergebnisse der Zugversuche bei Raumtemperatur. Die Umformgeschwindigkeit betrug bei $R_{p0,2}$ 8,33 $10^{-5}$ 1/s (0,5%/min) und bei $R_m$ 8,33 $10^{-4}$ 1/s (5%/min)

| Legierung | Charge | 7,7C-x•a | PN | Korngröße in μm | $R_{p02}$ in MPa | $R_m$ in MPa | $A_5$ in % |
|---|---|---|---|---|---|---|---|
| N06025 | 163968 | 1,192 | 0,0235 | 75 | 287 | 686 | 41 |
| N06025 | 160483 | 1,196 | 0,0256 | 76 | 340 | 721 | 43 |
| E | 126251 | 0,424 | 0,0334 | 121 | 251 | 675 | 80 |
| N06601 | 314975 | -0,101 | 0,1105 | 114 | 232 | 644 | 56 |
| N06601 | 156656 | -0,015 | 0,1045 | 136 | 238 | 645 | 53 |

Tabelle 4: Ergebnisse der MVT Tests.

| Legierung | Charge | Schweißgas | Gesamtrisslänge in mm | | DDC Risse in mm | |
|---|---|---|---|---|---|---|
| | | | 1% Biegedehnung | 4% Biegedehnung | 1% Biegedehnung | 4% Biegedehnung |
| N06025 | 163968 | Ar | 27 | 35 | 0 | 0 |
| N06025 | 163968 | Ar3%N | 0 | 3,5 | 0 | 0 |
| E | 126251 | Ar | 23 | 34 | 0,1 | 0 |
| E | 126251 | Ar3%N | 1,6 | 15 | 2 | 0,2 |
| N06601 | 314975 | Ar | 0,3 | 9,2 | 0 | 0,4 |
| N06601 | 314975 | Ar3%N | 6 | 13 | 0 | 1,4 |
| N06601 | 156656 | Ar | 1,9 | 10 | 0,2 | 0 |
| N06601 | 156656 | Ar3%N | 2,6 | 18 | 1,5 | 0 |

Tabelle 5: Ergebnisse der Warmzugversuche. Die Umformgeschwindigkeit betrug bei $R_{p0,2}$ 8,33 $10^{-5}$ 1/s (0,5%/min) und bei $R_m$ 8,33 $10^{-4}$ 1/s (5%/min)

| T in °C | Legierung | N06025 | E | N06601 | N06601 |
|---|---|---|---|---|---|
| | Charge | 163968 | 126251 | 314975 | 156656 |
| | Bezeichnung IfW | tVL | tVM | tVH | tVK |
| | Korngröße $\mu$m | 75 | 121 | 114 | 136 |
| 600 | $R_{p02}$ in MPA | 219 | 170 | 151 | 154 |
| 700 | $R_{p02}$ in MPA | 292 | 267 | 266 | 227 |
| 800 | $R_{P02}$ in MPA | 222 | 249 | 201 | 161 |
| 900 | $R_{p02}$ in MPA | 85 | 77 | 72 | 76 |
| 1100 | $R_{p02}$ in MPA | 33 | 26 | 25 | 29 |
| 600 | $R_m$ in MPA | 556 | 526 | 508 | 509 |
| 700 | $R_m$ in MPA | 530 | 506 | 500 | 466 |
| 800 | $R_m$ in MPA | 299 | 303 | 266 | 239 |
| 900 | $R_m$ in MPA | 136 | 127 | 119 | 121 |
| 1100 | $R_m$ in MPA | 51 | 45 | 43 | 46 |
| 600 | $A_5$ in % | 35 | 47 | 57 | 55 |
| 700 | $A_5$ in % | 30 | 31 | 56 | 36 |
| 800 | $A_5$ in % | 57 | 58 | 113 | 91 |
| 900 | $A_5$ in % | 82 | 108 | 136 | 98 |
| 1100 | $A_5$ in % | 68 | 83 | 152 | 92 |

Tabelle 6: Ergebnisse des Langsam-Warmzugversuches. Die Umformgeschwindigkeit betrug 1,0 $10^{-6}$ 1/s (6,0 $10^{-3}$ %/min) beim ganzen Versuch. Der Versuch wurde abgebrochen, wenn eine Dehnung von 33% und $R_m$ erreicht worden ist.

| T in °C | Legierung | N06025 | E | N06601 |
|---|---|---|---|---|
| | Charge | 163968 | 126251 | 156656 |
| | Bezeichnung IfW | tVL | tVM | tVK |
| | Korngröße $\mu$m | 75 | 121 | 136 |
| 700 | $R_{p02}$ in MPA | 337 | 274 | 243 |
| 800 | $R_{p02}$ in MPA | 139 | 142 | 89 |
| 1100 | $R_{p1}$ in MPA | 19 | 15 | 14 |
| 700 | $R_m$ in MPA | 358 | 358 | 288 |
| 800 | $R_m$ in MPA | 149 | 149 | 99 |
| 1100 | $R_m$ in MPA | 21 | 17 | 16 |
| 700 | $A_5$ in % | 15 | 13 | 17 |
| 800 | $A_5$ in % | 25 | 26 | >33 |
| 1100 | $A_5$ in % | >33 | >33 | >33 |

Figurenbeschreibung

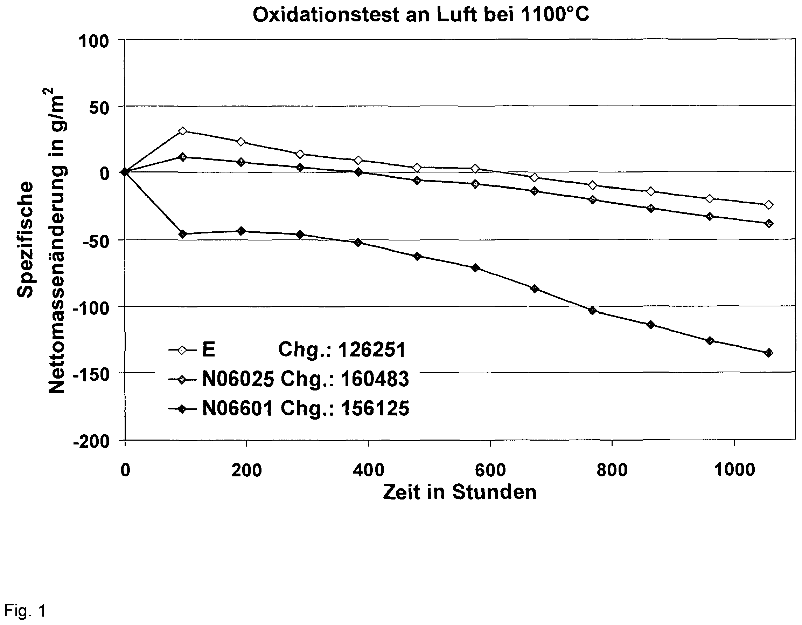

Figur 1    Ergebnisse des Oxidationsversuches bei 1100°C an Luft

**Patentansprüche**

1.  Verwendung einer Nickel-Chrom-Aluminium-Eisen-Legierung, mit (in Gew.-%) 12 bis 28 % Chrom, 1,8 bis 3,0 % Aluminium, 1,0 bis 15 % Eisen, 0,01 bis 0,5 % Silizium, 0,005 bis 0,5 % Mangan, 0,01 bis 0,20 % Yttrium, 0,02 bis 0,60 % Titan, 0,01 bis 0,2 % Zirkon, 0,0002 bis 0,05 % Magnesium, 0,0001 bis 0,05 % Kalzium, 0,03 bis 0,11 % Kohlenstoff, 0,003 bis 0,05 % Stickstoff, 0,0005 bis 0,008 % Bor, 0,0001 - 0,010 % Sauerstoff, 0,001 bis 0,030 % Phosphor, max. 0,010 % Schwefel, max. 0,5 % Molybdän, max. 0,5 % Wolfram, bedarfsweise enthaltend 0,01 bis 5,0 % Co und maximal 0,1 % Vanadium, Rest Nickel und den üblichen verfahrensbedingten Verunreinigungen, worin die Verunreinigungen in Gehalten von max. 0,5 % Cu, max. 0,002 % Pb, max. 0,002 % Zn, max. 0,002 % Sn eingestellt sind, als Elektrodenwerkstoff, wobei die folgenden Beziehungen erfüllt sein müssen:

$$0 < 7,7\ C - x \bullet a < 1,0 \hspace{4cm} (2)$$

mit

$$a = PN, \quad \text{wenn } PN > 0 \hspace{4cm} (3a)$$

bzw.

$$a = 0, \quad \text{wenn } PN \leq 0 \hspace{4cm} (3b)$$

und

$$x = (1,0\ Ti + 1,06\ Zr)/(0,251\ Ti + 0,132\ Zr) \hspace{2cm} (3c)$$

wobei

$$PN = 0,251\ Ti + 0,132\ Zr - 0,857\ N \hspace{3cm} (4)$$

und Ti, Zr, N, C die Konzentration der betreffenden Elemente in Masse-% sind.

2.  Verwendung nach Anspruch 1, mit einem Chromgehalt von 16 bis 28%.

3.  Verwendung nach Anspruch 1 oder 2, mit einem Chromgehalt von 20 bis 28 %.

4.  Verwendung nach einem der Ansprüche 1 bis 3, mit einem Aluminiumgehalt von 1,9 bis 2,9 %.

5.  Verwendung nach einem der Ansprüche 1 bis 4, mit einem Eisengehalt von 1,0 bis 11,0 %.

6.  Verwendung nach einem der Ansprüche 1 bis 5, mit einem Siliziumgehalt von 0,01 - 0,2 %, insbesondere 0,01 bis < 0,10 %.

7.  Verwendung nach einem der Ansprüche 1 bis 6, mit einem Mangangehalt von 0,005 bis 0,20 %.

8.  Verwendung nach einem der Ansprüche 1 bis 7 mit einem Yttriumgehalt von 0,01 bis < 0,045 %.

9.  Verwendung nach einem der Ansprüche 1 bis 8, mit einem Magnesiumgehalt von 0,0005 bis 0,03 %.

10. Verwendung nach einem der Ansprüche 1 bis 9, mit einem Kalziumgehalt von 0,0005 bis 0,02 %.

**11.** Verwendung nach einem der Ansprüche 1 bis 10, mit einem Kohlenstoffgehalt von 0,04 bis 0,10 %.

**12.** Verwendung nach einem der Ansprüche 1 bis 11, mit einem Stickstoffgehalt von 0,005 bis 0,04%.

**13.** Verwendung der Legierung nach einem der Ansprüche 1 bis 12 als Elektrodenwerkstoff für Zündelemente, insbesondere in Verbrennungsmaschinen.

**14.** Verwendung der Legierung nach einem der Ansprüche 1 bis 12 als Trägermaterial in einer Elektrode mit Edelmetallspitze.

**Claims**

**1.** A use of a nickel-chromium-aluminium-iron alloy, comprising (in % by weight) 12 through 28 % chromium, 1.8 through 3.0 % aluminium, 1.0 through 15 % iron, 0.01 through 0.6 % silicon, 0.005 through 0.5 % manganese, 0.01 through 0.20 % yttrium, 0.02 through 0.60 % titanium, 0.01 through 0.2 % zirconium, 0.0002 through 0.05 % magnesium, 0.0001 through 0.05 % calcium, 0.03 through 0.11 % carbon, 0.003 through 0.05 % nitrogen, 0.0005 through 0.008 % boron, 0.0001 through 0.010 % oxygen, 0.001 through 0.030 % phosphorous, max. 0.010 % sulphur, max. 0.5 % molybdenum, max. 0.5 % tungsten, if required containing 0.01 through 5.0 % Co and maximum 0.1 % vanadium, the rest being nickel and the usual process-dependent impurities, wherein the impurities are set to contents of 0.5 % Cu, max. 0.002 % Pb, max. 0.002 Zn, max. 0.002 % Sn, as electrode material, wherein the following relations have to be satisfied:

$$0 < 7.7\ C - x \cdot a < 1.0 \qquad\qquad (2)$$

with

$$a = PN,\ \text{if}\ PN > 0 \qquad\qquad (3a)$$

or

$$a = 0,\ \text{if}\ PN \leq 0 \qquad\qquad (3b)$$

and

$$x = (1.0\ Ti + 1.06\ Zr) / (0.251\ Ti + 0.132\ Zr) \qquad\qquad (3c)$$

wherein

$$PN = 0.251\ Ti + 0.132\ Zr - 0.857\ N \qquad\qquad (4)$$

and Ti, Zr, N, C are the concentrations of the relevant elements in % by mass.

**2.** A use according to claim 1, comprising a chromium content comprised between 16 and 28 %.

**3.** A use according to claim 1 or 2, comprising a chromium content comprised between 20 and 28 %.

**4.** A use according to one of the claims 1 through 3, comprising an aluminium content comprised between 1.9 and 2.9 %.

**5.** A use according to one of the claims 1 through 4, comprising an iron content comprised between 1.0 and 11.0 %.

**6.** A use according to one of the claims 1 through 5, comprising a silicon content comprised between 0.01 and 0.2 %, in particular between 0.01 and < 0.10 %.

7. A use according to one of the claims 1 through 6, comprising a manganese content comprised between 0.005 and 0.20 %.

8. A use according to one of the claims 1 through 7, comprising an yttrium content comprised between 0.01 and < 0.045 %.

9. A use according to one of the claims 1 through 8, comprising a magnesium content comprised between 0.0005 and 0.03 %.

10. A use according to one of the claims 1 through 9, comprising a calcium content comprised between 0.0005 and 0.02 %.

11. A use according to one of the claims 1 through 10, comprising a carbon content comprised between 0.04 and 0.10 %.

12. A use according to one of the claims 1 through 11, comprising a nitrogen content comprised between 0.005 and 0.04 %.

13. A use of the alloy according to one of the claims 1 through 12 as electrode material for ignition elements, in particular in internal combustion engines.

14. A use of the alloy according to one of the claims 1 through 12 as carrier material in an electrode having a noble metal tip.

**Revendications**

1. Utilisation d'un alliage nickel-chrome-aluminium-fer, comprenant (en % en poids) 12 à 28 % de chrome, 1,8 à 3,0 % d'aluminium, 1,0 à 15 % de fer, 0,01 à 0,6 % de silicium, 0,005 à 0,5 % de manganèse, 0,01 à 0,20 % d'yttrium, 0,02 à 0,60 % de titane, 0,01 à 0,2 % de zircon, 0,0002 à 0,05 % de magnésium, 0,0001 à 0,05 % de calcium, 0,03 à 0,11 % de carbone, 0,003 à 0,05 % d'azote, 0,0005 à 0,008 % de bore, 0,0001 à 0,010 % d'oxygène, 0,001 à 0,030 % de phosphore, max. 0,010 % de soufre, max. 0,5 % de molybdène, max. 0,5 % de tungstène, si nécessaire contenant 0,01 à 5,0 % de Co et maximum 0,1 % de vanadium, le reste étant du nickel et les impuretés usuelles résultant de l'élaboration, dans lequel les teneurs en impuretés sont réglées à max. 0,5 % de Cu, max. 0,002 % de Pb, max. 0,002 % de Zn, max. 0,002 % de Sn, en tant que matériau d'électrodes, les rapports suivants devant être satisfaits :

$$0 < 7,7\ C - x \cdot a < 1,0 \qquad\qquad (2)$$

avec

$$a = PN,\ si\ PN > 0 \qquad\qquad (3a)$$

ou

$$a = 0,\ si\ PN \leq 0 \qquad\qquad (3b)$$

et

$$x = (1,0\ Ti + 1,06\ Zr)\ /\ (0,251\ Ti + 0,132\ Zr) \qquad\qquad (3c)$$

dans lequel

$$PN = 0,251\ Ti + 0,132\ Zr - 0,857\ N \qquad\qquad (4)$$

et Ti, Zr, N, C étant les concentrations des éléments concernés en % en masse.

**2.** Utilisation selon la revendication 1, comprenant une teneur en chrome comprise entre 16 et 28 %.

**3.** Utilisation selon la revendication 1 ou la revendication 2, comprenant une teneur en chrome comprise entre 20 et 28 %.

**4.** Utilisation selon l'une des revendications 1 à 3, comprenant une teneur en aluminium comprise entre 1,9 et 2,9 %.

**5.** Utilisation selon l'une des revendications 1 à 4, comprenant une teneur en fer comprise entre 1,0 et 11,0 %.

**6.** Utilisation selon l'une des revendications 1 à 5, comprenant une teneur en silicium comprise entre 0,01 et 0,2 %, notamment entre 0,01 et < 0,10 %.

**7.** Utilisation selon l'une des revendications 1 à 6, comprenant une teneur en manganèse comprise entre 0,005 et 0,20 %.

**8.** Utilisation selon l'une des revendications 1 à 7, comprenant une teneur en yttrium comprise entre 0,01 et < 0,045 %.

**9.** Utilisation selon l'une des revendications 1 à 8, comprenant une teneur en magnésium comprise entre 0,0005 et 0,03 %.

**10.** Utilisation selon l'une des revendications 1 à 9, comprenant une teneur en calcium comprise entre 0,0005 et 0,02 %.

**11.** Utilisation selon l'une des revendications 1 à 10, comprenant une teneur en carbone comprise entre 0,04 et 0,10 %.

**12.** Utilisation selon l'une des revendications 1 à 11, comprenant une teneur en azote comprise entre 0,005 et 0,04 %.

**13.** Utilisation de l'alliage selon l'une des revendications 1 à 12 en tant que matériau d'électrodes pour des éléments d'allumage, notamment dans des moteurs à combustion interne.

**14.** Utilisation de l'alliage selon l'une des revendications 1 à 12 en tant que matériau de support dans une électrode comprenant une pointe en métal précieux.

Oxidationstest an Luft bei 1100°C

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0508058 A1
- EP 0549286 A
- DE 60004737 T2
- WO 2007149826 A2
- EP 1717330 A1